# EUROPEAN PATENT SPECIFICATION

(11) **EP 1 129 905 B1**
(45) Date of publication and mention of the grant of the patent: **28.06.2006**
(21) Application number: 01301895.7
(22) Date of filing: 01.03.2001
(51) Int. Cl.: B60R 1/068

(54) **An external rearview mirror**
Aussenrückspiegel
Rétroviseur extérieur

(30) Priority: 02.03.2000 BR 8000292
(43) Date of publication of application: 05.09.2001
(73) Proprietor: METAGAL INDUSTRIA E COMERCIO LTDA., Estado de Sao Paulo CEP:09990-090 (BR)
(72) Inventor: Takashi Miyabukuro, Pedro, No.326-Apt.61, CEP 09090-520 Estado de Sao Paulo (BR)
(74) Representative: Murgatroyd, Susan Elizabeth

(56) References cited:
- US-A- 3 352 524
- US-A- 3 659 477
- US-A- 3 934 489
- US-A- 4 628 760
- US-A- 4 876 911

## Description

The present invention relates to an external rearview mirror, appertaining to the field of automobile accessories.

External rear-view mirrors are already known, essentially comprising a mirror plate; a mechanism for adjusting the position of the mirror plate; a housing that accommodates the mechanism and the mirror plate; and a base, on which the housing is mounted and that is mounted to the side of the vehicle's body. The mechanism is of the type of remote activation substantially comprising an articulation with one part placed in the mirror plate and another part placed in the housing; three connection cables connected to the articulation, and a lever placed in the interior of the compartment of the vehicle and to which the other ends of the cables are connected.

Although this type of mirror performs the desired function, it has a relatively complex structure, particularly regarding the mechanism for position adjustment of the mirror plate having three cables.

The complexity of such a mechanism is not only due to the fact that there are three cables, but also to the fact that the articulation of the same has a relatively complex structure, so as to work with the three cables according to the logical functioning of the mechanism.

Such structure complexity results in a more difficult manufacture process than is desirable, with a correspondingly higher cost and other associated problems.

US-A-3934489 discloses an external rearview mirror according to the preamble of claim 1.

Each of the prior art documents, US-A-3934489, US-A-3352524 and US-A-3659477, discloses a remotely adjustable mirror which uses a single cable activated by a control member to provide adjustment of the mirror plate relative to the housing. In US-A-3934489 and US-A-36599477, articulation parts are respectively provided on the central region of the rear face of the mirror plate and on the housing, and activation of the cable causes relative movement of the articulation parts to adjust the mirror plate. US-A-3352524 discloses the use of camming members to achieve the pivotal movement of the mirror plate.

Thus, one object of the present invention is to simplify the structure of the mirror, particularly of its mechanism for the adjustment of the position of the mirror plate, so that the manufacturing process of the mirror is less complex and therefore cheaper, as well as ensuring that the mechanism performs efficiently.

Accordingly, the present invention consists in an external rearview mirror as defined by the features of claim 1 comprising a mirror plate, a mechanism for adjusting the position of the mirror plate, a housing that accommodates the mirror plate and the mechanism, and a mirror base on which the housing is mounted and which is mounted to the side of a vehicle body, wherein the mechanism comprises:-
an articulation including an articulation point formed by a first articulation part provided on a central region of the rear face of the mirror plate and a second articulation part provided on the housing and arranged to enable angular movement of the mirror plate about an axis passing through the plane of the mirror plate;
a movement transmission device comprising a sole transmission cable formed by an internal cable and an external sleeve;
an arm that projects perpendicularly from the rear face of the mirror plate with its free end anchored to one end of the cable, the end of the sleeve from which said cable end extends being fixed to a surface of the housing;
a spring anchored at one end thereof to the free end of the arm and at the other end thereof to a region of the housing between the arm and an end of the housing remote from the mirror base; and
a remote activation mechanism connected to the other end of the cable in such a way that the cable may be respectively pulled or pushed inside the sleeve, against or in favor of the force of the spring, according to corresponding movement of the activation mechanism; wherein
said second articulation part is provided in a central region of the rear wall of the housing; characterised in that:
   said articulation includes a further articulation point comprising an axis solid with the mirror plate and projecting from at least one of the upper and the lower sides of the mirror plate in the plane of the mirror plate; and a seat provided in the front region of at least one of the upper and the lower walls of the housing corresponding to the or each axis.

The invention will now be described by way of example with reference to the accompanying drawings, in which:-
Fig.1 shows an embodiment of the invention in an exploded perspective; and

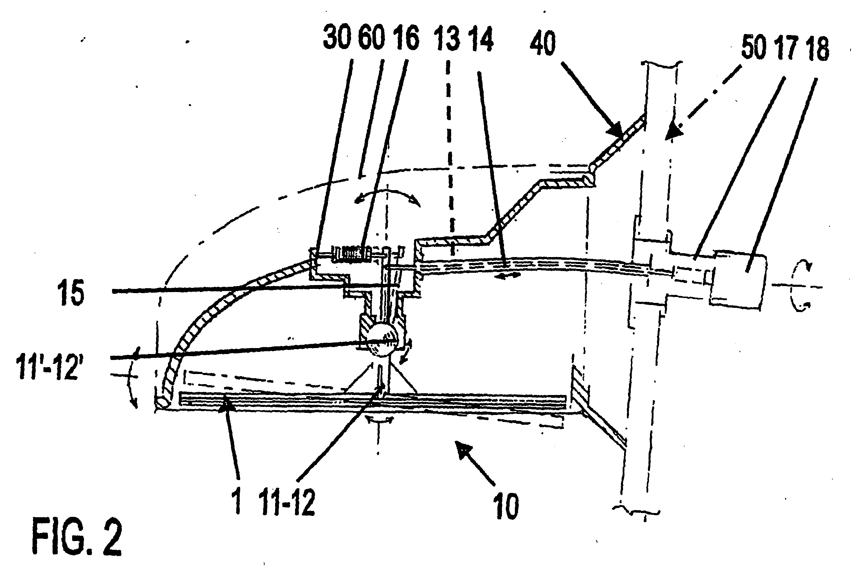

Fig.2 shows the assembled embodiment and its operation.

Referring to the Figures, the mirror is an external rear-view mirror and substantially comprises a mirror plate 1; a mechanism 10 for adjustment of the position of the mirror plate; a housing 30 that accommodates the mirror plate 1 and the mechanism 10; and a base 40 on which the housing 30 is mounted and which is mounted on the side of a vehicle body 50. The mechanism 10 is of the mechanical type, of remote activation and substantially comprises an articulation 11, 12 that is intercalated between the mirror plate 1 and the housing 30; a device 13, 14, 15, 16 for transmission of movement to the mirror plate 1; and a remote activation mechanism 17, 18, which is internal in the vehicle and acts on the movement transmission device 13,14,15,16.

The articulation 11, 12 is formed by first parts 11, 11' that are provided on the plate 1 and second parts 12, 12' that are provided on the housing 30 disposed so as to make possible angular movements of the mirror plate 1 about an axis that passes through the plane of the mirror plate 1. The movement transmission device 13, 14, 15, 16 comprises a sole transmission cable, formed by an internal cable 13 and by an external sleeve 14. The movement transmission device also has an arm 15 projecting perpendicularly from the rear face of the mirror plate 1 and anchored at its free end to one end of the cable 13, and a spring 16 opposed to the end of the cable 13 anchored to the arm 15. One end of the spring 16 is connected to the end of the arm 15 and the opposed end of the spring 16 is connected to a region of the housing 30 located between the arm 15 and the end of the housing 30 remote from the base 40. The end of the sleeve 14, from which the cable end connected to the arm 15 extends, is fixed to the housing 30 adjacent the end of the arm 15. The remote activation mechanism 17, 18 includes a base 17, mounted in an appropriate internal surface of the vehicle and in which is fixed the other end of the sleeve 14, and a button 18 mounted in the base 17 and connected to the other end of the cable 13 in such a way that the cable is pulled or pushed inside the sleeve 14, respectively, against or in favor of the force of the spring 16, according to the corresponding movement of the button 18.

The articulation 11, 12 comprises a first articulation point consisting of an axis 11, solid with the mirror plate 1, disposed substantially in the plane of the mirror plate 1 and projecting from the lower side thereof; and a seat 12 provided in the front region of the lower wall of the housing 30 and in which the axis 11 is placed and able to move in an angular way; and a second articulation point formed by a first articulation part 11' incorporated in the center of the rear face of the mirror plate 1, and a second articulation part 12' incorporated in the center of the internal face of the rear wall of the housing 30.

Optionally, another articulation point (not shown) may also be formed by an axis projecting from the upper side of the mirror plate 1 in the plane of the mirror plate and a corresponding seat provided in the front region of the upper wall of the housing 30.

The arm 15, to which the end of the cable 13 is connected, is solid and coaxial with the first articulation part 11' of the second articulation point of the mirror plate 1, and projects through the central opening of the second articulation part 12' and its free end remains slightly projected with relation to the external side of the rear wall of the housing 30.

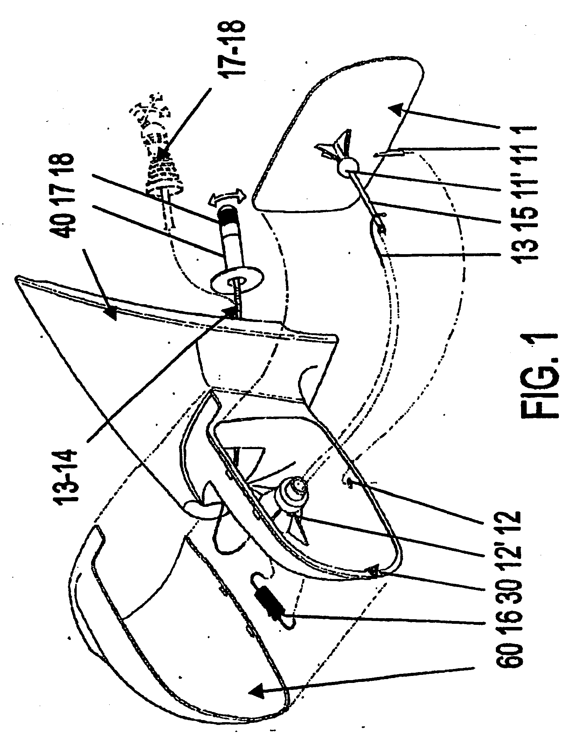

The remote activation mechanism 17, 18 may be of the turning type (shown in plain lines in figure 1) or the lever type with orthogonal movements (joystick) (shown in dotted lines in figure 1).

The housing 30 may be formed by an internal body that accommodates the mirror plate 1 and the mechanism 10, and is mounted on the base 40 and receives a finishing cover 60.

The mirror plate 1 may have the usual structure, that is, be formed of glass having a reflective layer and a base which receives the other parts that form the mirror and is provided with the articulation parts 11, 11'.

In operation of the mirror, when the user intends to adjust the position of the mirror plate 1 inside the housing 30, the user activates the button 18 that pulls or pushes the cable 13 inside the sleeve 14, which makes the arm 15 move in an angular way in a plane perpendicular to the surface of the mirror plate and in such a way as to be closer to or more distant from the vehicles' body. This movement of the arm 15 causes articulation of the axis 11 and the articulation part 11' of the mirror plate 1 in the seat 12 and articulation part 12' of the housing 30, respectively, which causes the mirror plate to move in an angular way about its axis, so that the user can obtain a better view of the rear region of the vehicle.

In this way, the present mirror solves the problems that are usually observed in similar conventional mirrors, because instead of using three articulation cables and the usual complex articulation, it is provided with a sole cable that actuates together with a simple articulation arrangement.

It has also to be stressed that such a simplified structure of the mirror also provides simplification of the productive process and a decrease in costs as compared to similar conventional mirrors.

Modifications may be made to the mirror, in relation to the material, dimensional, structural and/or ornamental details thereof, without departing from the invention as defined by the claims.

## Claims

1. An external rearview mirror comprising a mirror plate, a mechanism (10) for adjusting the position of the mirror plate (1), a housing (30) that accommodates the mirror plate (1) and the mechanism (10), and a mirror base (40) on which the housing (30) is mounted and which is mounted to the side of a vehicle body (50), wherein the mechanism (10) comprises:
an articulation (11,12,11',12') including an articulation point formed by a first articulation part (11') provided on a central region of the rear face of the mirror plate (1) and a second articulation part (12') provided on the housing (30) and arranged to enable angular movement of the mirror plate (1) about an axis passing through the plane of the mirror plate (1);
a movement transmission device (13,14,15,16) comprising a sole transmission cable formed by an internal cable (13) and an external sleeve (14);
an arm (15) that projects perpendicularly from the rear face of the mirror plate (1) with its free end anchored to one end of the cable (13), the end of the sleeve (14) from which said cable end extends being fixed to a surface of the housing(30);
a spring (16) anchored at one end thereof to the free end of the arm (15) and at the other end thereof to a region of the housing (30) between the arm (15) and an end of the housing (30) remote from the mirror base (40); and
a remote activation mechanism (17,18) connected to the other end of the cable (13) in such a way that the cable (13) may be respectively pulled or pushed inside the sleeve (14), against or in favor of the force of the spring (16), according to corresponding movement of the activation mechanism (17,18);
wherein said second articulation part (12') is provided in a central region of the rear wall of the housing (30); **characterised in that**
said articulation (11,12,11',12') includes a further articulation point comprising an axis (11) solid with the mirror plate (1) and projecting from at least one of the upper and the lower sides of the mirror plate (1) in the plane of the mirror plate (1); and a seat (12) provided in the front region of at least one of the upper and the lower walls of the housing (30) corresponding to the or each axis (11).

2. A mirror as claimed in claim 1, wherein the remote activation mechanism (17,18) comprises a base (17) mounted on an internal surface of the vehicle body (50) and in which the other end of the sleeve (14) is fixed, and a button (18) mounted on the base (17).

3. A mirror as claimed in claim 1 or 2, wherein the arm (15) is solid and coaxial with the first articulation part (11') and extends through a central opening of the second articulation part (12').

4. A mirror as claimed in any preceding claim, wherein the remote activation mechanism (17,18) is of the turning type.

5. A mirror as claimed in any one of claims 1 to 3, wherein the remote activation mechanism (17,18) is of the lever type with orthogonal movements.

## Patentansprüche

1. Außenrückspiegel, umfassend eine Spiegelplatte, einen Mechanismus (10) zum Einstellen der Position der Spiegelplatte (1), ein Gehäuse (30), welches die Spiegelplatte (1) und den Mechanismus (10) aufnimmt, und eine Spiegelbasis (40), auf welcher das Gehäuse (30) angebracht ist und welches auf der Seite einer Fahrzeugkarosserie (50) angebracht ist, wobei der Mechanismus (10) umfasst:
ein Gelenk (11, 12, 11', 12'), welches einen Gelenkpunkt umfasst, der durch einen ersten Gelenkteil (11'), der in einem zentralen Bereich der Rückseite der Spiegelplatte (1) bereitgestellt ist, und einen zweiten Gelenkteil (12') ausgebildet wird, der am Gehäuse (30) bereitgestellt und so angeordnet ist, um eine Winkelbewegung der Spiegelplatte (1) um eine Achse zu ermöglichen, die durch die Ebene der Spiegelplatte (1) hindurchgeht;
eine Bewegungsübertragungsvorrichtung (13, 14, 15, 16), welche ein einzelnes Übertragungskabel umfasst, das durch ein inneres Kabel (13) und eine äußere Hülle (14) ausgebildet wird;
einen Arm (15), welcher senkrecht von der Rückseite der Spiegelplatte (1) vorragt, wobei sein freies Ende mit einem Ende des Kabels (13) verankert ist, wobei das Ende der Hülle (14), aus dem sich das Kabelende erstreckt, an einer Oberfläche des Gehäuses (30) befestigt ist;
eine Feder (16), welche an einem ihrer Enden mit dem freien Ende des Arms (15) und mit ihrem anderen Ende an einem Bereich des Gehäuses (30) zwischen dem Arm (15) und einem Ende des Gehäuses (30), das entfernt von der Spiegelbasis (40) ist, verankert ist; und
einen Fernbetätigungsmechanismus (17, 18), welcher mit dem anderen Ende des Kabels (13) auf solch eine Weise verbunden ist, dass das Kabel (13) in der Hülle (14) gegen oder mit der Kraft der Feder (16) jeweils entsprechend der entsprechenden Bewegung des Betätigungsmechanismus (17, 18) gezogen oder geschoben werden kann;
wobei der zweite Gelenkteil (12') in einem zentralen Bereich der Rückwand des Gehäuses (30) bereitgestellt ist; **dadurch gekennzeichnet, dass**
das Gelenk (11, 12, 11', 12') einen weiteren Gelenkpunkt umfasst, welcher eine Achse (11), die einstückig fest mit der Spiegelplatte (1) ausgebildet ist und von wenigstens einer von der oberen beziehungsweise der unteren Seite der Spiegelplatte (1) in der Ebene der Spiegelplatte (1) vorragt; und eine Aufnahme (12) umfasst, die im vorderen Bereich von wenigstens einer von der oberen beziehungsweise der unteren Wand des Gehäuses (30) entsprechend der oder jeder der Achsen (11) bereitgestellt ist.

2. Spiegel nach Anspruch 1, wobei der Fernbetätigungsmechanismus (17, 18) eine Basis (17), welche auf einer Innenoberfläche der Fahrzeugkarosserie (50) angebracht ist und in welcher das andere Ende der Hülle (14) befestigt ist, und einen auf der Basis (17) angebrachten Knopf (18) umfasst.

3. Spiegel nach Anspruch 1 oder 2, wobei der Arm (15) einstückig fest und koaxial mit dem ersten Gelenkteil (11') ist und sich durch eine zentrale Öffnung des zweiten Gelenkteils (12') erstreckt.

4. Spiegel nach jedem der vorangehenden Ansprüche, wobei der Fernbetätigungsmechanismus (17, 18) von der Bauart mit drehender Betätigung ist.

5. Spiegel nach jedem der Ansprüche 1 bis 3, wobei der Fernbetätigungsmechanismus (17, 18) von der Bauart mit Betätigung mittels Hebel mit orthogonalen Bewegungen ist.

## Revendications

1. Rétroviseur externe comprenant une plaque miroir, un mécanisme (10) pour régler la position de la plaque miroir (1), un boîtier (30) qui reçoit la plaque miroir (1) et le mécanisme (10), et une base de miroir (40) sur laquelle le boîtier (30) est monté et qui est montée sur le côté d'une carrosserie (50) de véhicule, dans lequel le mécanisme (10) comprend :
une articulation (11, 12, 11', 12') comprenant un point d'articulation formé par une première partie d'articulation (11') prévue sur une région centrale de la face arrière de la plaque miroir (1) et une seconde partie d'articulation (12') prévue sur le boîtier (30) et agencée pour permettre le mouvement angulaire de la plaque miroir (1) autour d'un axe passant par le plan de la plaque miroir (1) ;
un dispositif de transmission de mouvement (13, 14, 15, 16) comprenant un seul câble de transmission formé par un câble interne (13) et un manchon externe (14) ;
un bras (15) qui fait saillie perpendiculairement à partir de la face arrière de la plaque miroir (1) avec son extrémité libre ancrée sur une extrémité du câble (13), l'extrémité du manchon (14) à partir de laquelle ladite extrémité de câble s'étend en étant fixée sur une surface du boîtier (30) ;
un ressort (16) ancré au niveau de son extrémité à l'extrémité libre du bras (15) et au niveau de son autre extrémité à une région du boîtier (30) entre le bras (15) et une extrémité du boîtier (30) à distance de la base (40) du miroir ; et
un mécanisme d'actionnement à distance (17, 18) raccordé à l'autre extrémité du câble (13) de sorte que le câble (13) peut être respectivement tiré ou poussé à l'intérieur du manchon (14), contre ou en faveur de la force du ressort (16), selon le mouvement correspondant du mécanisme d'actionnement (17, 18) ;
dans lequel ladite seconde partie d'articulation (12') est prévue dans une région centrale de la paroi arrière du boîtier (30) et **caractérisé en ce que** :
ladite articulation (11, 12, 11', 12') comprend un autre point d'articulation comprenant un axe (11) solidaire de la plaque miroir (1) et faisant saillie à partir d'au moins l'un des côtés supérieur et inférieur de la plaque miroir (1) dans le plan de la plaque miroir (1) ; et un siège (12) prévu dans la région avant d'au moins l'une des parois supérieure et inférieure du boîtier (30) correspondant au ou à chaque axe (11).

2. Rétroviseur selon la revendication 1, dans lequel le mécanisme d'actionnement à distance (17, 18) comprend une base (17) montée sur une surface interne de la carrosserie (50) de véhicule et dans laquelle l'autre extrémité du manchon (14) est fixée, et un bouton (18) monté sur la base (17).

3. Rétroviseur selon la revendication 1 ou 2, dans lequel le bras (15) est solidaire et coaxial à la première partie d'articulation (11') et s'étend à travers une ouverture centrale de la seconde partie d'articulation (12').

4. Rétroviseur selon l'une quelconque des revendications précédentes, dans lequel le mécanisme d'actionnement à distance (17, 18) est du type à rotation.

5. Rétroviseur selon l'une quelconque des revendications 1 à 3, dans lequel le mécanisme d'actionnement à distance (17, 18) est du type à levier avec des mouvements orthogonaux.
